(19) Europäisches Patentamt

European Patent Office

Office européen des brevets

(11) **EP 1 052 088 A1**

(12) **EUROPEAN PATENT APPLICATION**
published in accordance with Art. 158(3) EPC

(43) Date of publication:
15.11.2000 Bulletin 2000/46

(51) Int. Cl.[7]: **B32B 7/02**

(21) Application number: 99900679.4

(86) International application number:
PCT/JP99/00301

(22) Date of filing: 26.01.1999

(87) International publication number:
WO 99/38684 (05.08.1999 Gazette 1999/31)

(84) Designated Contracting States:
DE ES FR GB IT NL

(30) Priority: 29.01.1998 JP 3203098

(71) Applicant:
KUREHA KAGAKU KOGYO KABUSHIKI KAISHA
Chuo-ku, Tokyo 103-8552 (JP)

(72) Inventors:
• UEYAMA, Takahisa,
Polymer Proc.Tech.Cent.,
Kureha
Niihari-gun, Ibaraki-ken 311-3436 (JP)

• ITOH, Tadayoshi
Niihari-gun, Ibaraki-ken 315-0054 (JP)
• TOBITA, Hisanori,
Polymer Proc.Tech.Cent.,
Kureha
Niihari-gun, Ibaraki-ken 311-3436 (JP)

(74) Representative:
Bakkum, Ruben Joseph
van Exter Polak & Charlouis B.V.,
P.O. Box 3241
2280 GE  Rijswijk (NL)

(54) **HEAT-SHRINKABLE MULTILAYERED FILM**

(57)    In a heat-shrinkable multilayer film having at least three layers including a third layer having a small heat shrinkability, the third layer is controlled to have a heat shrinkability at 80 °C of above 5 % and at most 20 %, or the third layer is formed of a vinylidene chloride terpolymer. As a result, the deterioration of optical properties after heat shrinkage, such as whitening or lowering of transparency, of the multilayer film, is suppressed.

EP 1 052 088 A1

## Description

[TECHNICAL FIELD]

The present invention relates to a heat-shrinkable multilayer film having at least 3 layers. More specifically, the present invention relates to a heat-shrinkable multilayer film including a third layer which has a substantially smaller heat shrinkability than the entire multilayer film, and yet capable of providing improved optical properties after the heat shrinkage.

[BACKGROUND ART]

A heat-shrinkable multilayer film is used so as to tightly cling to contents and provide the contents with a beautiful appearance. For example, a bag formed of a heat-shrinkable multilayer film is used for vacuum packaging of contents and then caused to shrink by hot water showering, passing through a hot oven or dipping in hot water.

In some cases, the shrinkage of a heat-shrinkable multilayer film can result in remarkable deterioration of optical properties, such as transparency and gloss of the film after the shrinkage. The deterioration of optical properties after shrinkage is not preferable in a field requiring high optical characteristics. For example, in the case of packaging contents such as raw meat or processed meat with a heat-shrinkable multilayer film, an edge (i.e., a marginal portion) of the bag can be whitened after shrinkage. This phenomenon is not preferred by traders in the field. A film immediately after the production is less liable to be whitened after heat shrinkage. A film after storage is liable to be whitened. A higher storage temperature for a heat-shrinkable multilayer film is more liable to cause deterioration of optical properties of the film.

Japanese Laid-Open Patent Application (JP-A) 8-187814 has disclosed a heat-shrinkable biaxially stretched multilayer film including a first layer comprising an ethylene/$\alpha$-olefin copolymer having a main DSC peak at below 105 °C and having a free shrinkability of at least 80 % at 185 °F (= 85 °C), wherein all the layers are shrink-fittable to each other.

The deterioration of optical properties caused by shrinkage of a heat-shrinkable multilayer film is attributable to a large difference in heat shrinkability among respective layers constituting the heat-shrinkable multilayer film. Particularly, if a third layer has a heat-shrinkability smaller than the entire layers, the third layer cannot follow the heat shrinkability of the other layers to cause flexural deformation of the third layer or voids at the layer boundary, leading to such deterioration of optical properties. Such a third layer as a functional layer causing the deterioration of optical properties due to its small heat-shrinkability in a heat-shrinkable multilayer film is typically a layer of a gas-barrier resin as represented by a vinylidene chloride copolymer.

[DISCLOSURE OF INVENTION]

An object of the present invention is to provide a beat-shrinkable multilayer film capable of suppressing the deterioration of optical properties of the film after heat-shrinkage.

As a result of study of the present inventors with the above object, it has been found that even a heat-shrinkable multilayer film including a third layer having a substantially smaller heat-shrinkability than the entire multilayer film can effectively suppress the deterioration of optical properties after heat shrinkage. According to a first aspect of the present invention, there is provided a heat-shrinkable multilayer film comprising at least three layers including a first layer, a second layer and a third layer laminated in this order, wherein the third layer has a heat shrinkability at 80 °C which is smaller than a heat shrinkability at 80 °C of the entire heat-shrinkable multilayer film, exceeds 5 % and is at most 20 %. According to a second aspect of the present invention, there is provided a heat-shrinkable multilayer film comprising at least three layers including a first layer, a second layer and a third layer laminated in this order, wherein the third layer has a heat shrinkability smaller than a heat shrinkability of the entire heat-shrinkable multilayer film and comprises a vinylidene chloride terpolymer.

[EMBODIMENTS OF THE INVENTION]

Hereinbelow, the present invention will be described in detail.

A heat-shrinkable multilayer film referred to herein is a packaging material principally comprising a thermoplastic resin. Such film materials may be formed into bags or pouches by a bag-making machine for filling with contents or used for tray-packaging of contents by an automatic packaging machine.

The first layer is principally a surface layer.

The second layer is disposed between the first layer and the third layer and is disposed in direct adhesion with the third layer. The second layer is a layer having a function of adhering to the third layer, but can have a larger thickness than an ordinary adhesive layer as far as it has a function of adhering to the third layer.

The third layer is a function layer principally disposed as an intermediate layer, which may for example be a layer comprising a gas barrier property-imparting resin, a layer comprising a resin excellent in low-temperature strength or heat resistance, or a layer comprising a resin for reinforcing the entire layers, but the present invention is particularly effective in the case where the third layer is a gas-barrier resin layer. Such a third layer causing a deterioration of optical properties after heat shrinkage can be isolated by certain methods (i.e., does not show a strong adhesion with adjacent layers) in many cases, so that a heat-shrinkability of the third layer alone can be measured in many cases. As far as it can be isolated integrally from the other layers, the third layer can be composed of not only a single layer but also of a plurality of layers. For the improvement of optical properties after the heat shrinkage, it is preferred that the third layer is disposed as an intermediate layer. Accordingly, the heat-shrinkable multilayer film of the present invention may generally further include a fourth layer outside the third layer for constituting a surface layer opposite the first layer, and can optionally further include an arbitrary intermediate layer inclusive of an adhesive layer between the third layer and the fourth layer.

A polymeric material constituting the first layer may be appropriately selected from thermoplastic resins inclusive of: polyolefins polymerized by using a metallocene catalyst (sometimes abbreviated as "SSC") inclusive of linear high-density polyethylene (abbreviated as "SSC-LHDPE"), linear medium-density polyethylene (abbreviated as "SSC-LMDPE"), linear low-density polyethylene (abbreviated as "SSC-LLDPE") and very low-density polyethylene (abbreviated as "SSC-VLDPE", also called "plastomer"); conventional types of ethylene-$\alpha$-olefin copolymers inclusive of "LLDPE" and "VLDPE"; ethylene-vinyl acetate copolymer ("EVA"), ethylene-methacrylic acid copolymer ("EMAA"), ethylene-methacrylic acid-unsaturated aliphatic carboxylic acid ester copolymer, low-density polyethylene, ionomer resin ("IO (resin)"), ethylene-acrylic acid copolymer ("EAA"), ethylene-methyl acrylate copolymer ("EMA"), ethylene-ethyl acrylate copolymer ("EEA"), ethylene-butyl acrylate copolymer, polypropylene resin, polyester resin, aliphatic polyamide or aromatic polyamide. It is also possible to use a blend including at least one species of such a first layer resin within an extent of not impairing the transparency of the resultant film after the shrinkage.

Among the above, preferred examples of such resins constituting the surface layer, inclusive of a sealing adhesive layer, may include: SSC-LLDPE, SSC-VLDPE, LLDPE, VLDPE, EVA, EMAA, ethylene-methacrylic acid-unsaturated aliphatic carboxylic acid ester copolymer, and IO resins. A particularly preferred class of SSC-type polyolefins may include those obtained by using a constrained geometry catalyst (a type of metallocene catalyst developed by Dow Chemical Company). The constrained geometry catalyst may provide ethylene-$\alpha$-olefin copolymers which may be classified as a substantially linear polyethylene resin having ca. 0.01 - ca. 3, preferably ca. 0.01 - ca. 1, more preferably ca. 0.05 - ca. 1, long-chain branching(s) per 1000 carbon atoms. Because of long-chain branches each having ca. 6 or more carbon atoms selectively introduced into its molecular structure, the ethylene-$\alpha$-olefin copolymer may be provided with excellent physical properties and good polymer processability, and an example thereof is commercially available from Dow Chemical Company under a trade name of "AFFINITY" or "ELITE" (including 1-octane as $\alpha$-olefin). Other examples of polyethylene resins obtained by using a metallocene catalyst may include those available from Exxon Co. under a trade name of "EXACT". Such a metallocene-catalyzed polyolefin (SSC-polyolefin) may have a dispersion factor defined as a ratio (Mw/Mn) between a weight-average molecular weight (Mw) and a number-average molecular weight (Mn) of below 3, preferably 1.5 - 2.8, more preferably 1.9 - 2.2.

Preferred examples of resins constituting an intermediate layer which can be disposed adjacent to the first layer may include copolymers of at least one species of intra-molecular oxygen atom-containing monomers and ethylene. Specific examples thereof may include: EVA, ethylene-alkyl arylates having 1 - 4 carbon atoms (EMA, EEA, etc.), ethylene-methacrylic acid-unsaturated aliphatic carboxylic acid ester copolymers, EMAA, and IO. These resins can also be used for constituting the second layer. Further, a metallocene-catalyzed polyethylene having a density below 0.900 g/cm$^3$ is preferred because of a good stretch orientability and further a capability of providing a multilayer film having a large heat-shrinkability.

Examples of the gas-barrier resins, particularly those used as oxygen gas barrier resins, constituting the third layer, may be known materials including: EVOH; aromatic polyamides comprising an aromatic diamine, such as polymetaxylylene adipamide (hereinafter abbreviated as "nylon MXD6"), aromatic polyamides comprising an aromatic carboxylic acid such as polyhexamethylene isophthalamide/terephthalamide (hereinafter abbreviated as "nylon 6I/6T") which is a copolymer of isophthalic acid, terephthalic acid and hexamethylenediamine; and vinylidene chloride copolymers (PVDC). Among these gas barrier resins, PVDC is suitable because of an oxygen gas-barrier property that is little dependent on moisture. PVDC is a copolymer of preferably 70 - 97 wt. %, more preferably 80 - 95 wt. %, of vinylidene chloride, and preferably 3 - 30 wt. %, more preferably 5 - 20 wt. %, of a copolymerizable monomer.

Examples of another monomer copolymerizable with vinylidene chloride may include: vinyl chloride; alkyl acrylates (having 1 - 18 carbon atoms in the alkyl group), such as methyl acrylate, butyl acrylate, 2-ethylhexyl acrylate, lauryl acrylate and stearyl acrylate; alkyl methacrylates (having 1 - 18 carbon atoms in the alkyl group), such as methyl methacrylate, butyl methacrylate, 2-ethylhexyl methacrylate, lauryl methacrylate and stearyl methacrylate; vinyl cyanates, such as acrylonitrile and methacrylonitrile; aromatic vinyls, such as styrene; vinyl esters of aliphatic carboxylic acids, such as vinyl acetate; alkyl vinyl ethers having 1 - 18 carbon atoms; vinyl-polymerizable unsaturated carboxylic acids, such as acrylic acid, methacrylic acid, maleic acid, fumaric acid and itaconic acid; alkyl esters (inclusive of partial esters, having 1 - 18 carbon atoms in the alkyl group) of vinyl-polymerizable unsaturated carboxylic acids, such as maleic acid, fumaric acid and itaconic acid; epoxy group-containing vinyl-polymerizable monomers, such as glycidyl acrylate and glycidyl methacrylate; diene compounds, such as butadiene and isoprene, and chlorinated diene compounds, such as chloroprene; and polyfunctional monomers having at least two copolymerizable double bonds in the molecule, such a divinylbenzene and ethylene glycol di(meth)acrylate. One or more copolymerizable monomers can be used. Among these, copolymers including vinylidene chloride and vinyl chloride are preferred. It is particularly preferred to use a binary copolymer of vinylidene chloride and vinyl chloride, or a terpolymer of vinylidene chloride and vinyl chloride constituting such a binary copolymer, and also a third (and optionally a fourth) monomer copolymerizable therewith, e.g., an alkyl (meth)acrylate (having 1 - 18 carbon atoms in the alkyl group), such as lauryl (meth)acrylate, added in such a form as to replace 1 - 15 wt. %, particularly 3 - 10 wt. %, in total of the vinylidene chloride and vinyl chloride. Such a vinylidene chloride terpolymer is preferred because of a smaller rigidity and a less liability of whitening after shrinkage. In the first embodiment of the present invention, a vinylidene chloride binary copolymer is preferably used as the third layer-constituting resin. In the second embodiment of the present invention, a vinylidene chloride terpolymer is preferably used, optionally in mixture with a binary copolymer or for constituting a composite layer together with such a binary copolymer.

PVDC can be blended, as desired, with a known stabilizer, a polymeric plasticizer as represented by a polyester-based one, or a polyolefin resin as represented by, e.g., ethylene-vinyl acetate copolymer. PVDC can further contain generally used various additives, as desired, examples of which may include: plasticizers, stabilizers, ultraviolet absorbers, lubricants, antistatic agents and pigments. Specific examples of such additives may include: plasticizers, such as dioctylphthalate, acetyl tributyl citrate, dibutyl sebacate, dioctyl sebacate, and acetylated monogycerides, or polyester plasticizers comprising saturated aliphatic dicarboxylic acids and polyhydric alcohols; epoxy-type stabilizers, such as epoxidized soybean oil, epoxidized linseed oil, epoxidized octyl stearate, and epoxy group-containing resins; stabilizers of inorganic bases, such as magnesium hydroxide, magnesium oxide, and calcium hydrophosphate; lubricants inclusive of waxes, such as oxidized polyethylene wax, paraffin wax, polyethylene wax and montate ester waxes, aliphatic acid esters such as glycerin monoester, and mono- and bis-amides of aliphatic acids; nonionic surfactants, such as sorbitan aliphatic acid esters, polyglycerin aliphatic acid esters and polyoxyethylene sorbitan aliphatic acid esters; and ultraviolet absorbers, such as 2-(2'-hydroxy-3'-5'-di-tert-butylphenyl)-5-chlorobenzotriazole.

Among these additives, each of the plasticizer and the stabilizer may preferably be added in an amount of at most 10 wt. parts, more preferably at most 6 wt. parts, per 100 wt. parts of PVDC. In the present invention, these additives may be added in a powder form before extrusion, but can be blended in a slurry state after polymerization of vinylidene chloride-based monomers or added to vinylidene chloride-based monomers to be polymerized in advance of the polymerization.

A low-molecular weight plasticizer is liable to migrate into an adjacent layer with lapse of time after the film production to result in a lowering in heat resistance of the second layer and an increase in rigidity of the PVDC layer, thus promoting deterioration of optical properties after the shrinkage. Accordingly, such a low-molecular weight plasticizer should preferably be added in a small amount within an extent of allowing the extrusion processing.

If a parison of PVDC quenched after melt-extrusion is left standing for some time and then biaxially stretched, the film becomes less liable to cause whitening after the shrinkage. Further, a ternary PVDC can be readily provided with a smaller rigidity, so that it is less liable to cause whitening after the shrinkage.

It is preferred that the PVDC layer exhibits an oxygen permeability of at least $4.0 \times 10^{-13}$ $cm^3.cm/cm^2.sec.cmHg$, more preferably at least $5.0 \times 10^{-13}$ $cm^3/cm/cm^2.sec.cmHg$, from the viewpoint of suppressing the deterioration of optical properties after the shrinkage. On the other hand, at most $1.5 \times 10^{-12}$ $cm^3.cm/cm^2.sec.cmHg$ is preferred from the viewpoint of gas-barrier property.

It is preferred that the heat-shrinkable multilayer film of the present invention has a heat-shrinkability at 80 °C of at least 35 % as a whole.

In the heat-shrinkable multilayer film having such an overall heat shrinkability, the third layer is set to have a heat shrinkability at 80 °C of above 5 %, preferably at least 7 %, and at most 20 %, according to the first embodiment of the present invention. Further, in case where the heat-shrinkable multilayer film has a heat shrinkability of 50 % or higher, the deterioration of optical properties after the shrinkage of the heat-shrinkable multilayer film can be more effectively suppressed if the third layer has a heat shrinkability of preferably at least 7 %, more preferably at least 11 %. In the case where the third layer is a PVDC layer, it is difficult to effect stretch orientation so as to provide the layer with a heat shrinkability exceeding 20 %. Herein, the heat shrinkability at 80 °C of the third layer in the case where the third layer comprises a plurality of layers, means a heat shrinkability at 80 °C of the entire third layer adjacent to the second layer.

In the second embodiment of the present invention, the third layer comprises a ternary PVDC, and in this case, the deterioration of optical properties after the heat shrinkage can be prevented even if the third layer is not provided with the above-mentioned heat shrinkability characteristic.

In the case where low-temperature strength or heat-resistance is required, it is possible to use a resin selected from thermoplastic resins, such as polypropylene resins, polyester resins, aliphatic polyamides, and aromatic polyamides.

The polyester resins may include a co-polyester resin containing isophthalic acid as a comonomer and having an IV value of ca. 0.7 - 0.8. The aliphatic nylons may include: nylon-6 (polycapramide), nylon-66 (polyhexamethyleneadipamide), nylon-610 (polyhexamethylenesebacamide), nylon-12 (ring-opening polymer of lauryllactam), nylon-6/66 (copolymer of ε-caprolactam and hexamethyleneadipamide), nylon-6/610 (copolymer of ε-caprolactam and hexamethylenesebacamide), and nylon 6/12 (copolymer of ε-caprolactam and lauryllactam). Among these, nylon-6/66 and nylon-6/12 are preferred in view of polymer processability. The aliphatic polyamides can be used singly or in a blend of two or more species. It is also possible to use a blend comprising such an aliphatic polyamide principally and an aromatic polyamide.

An adhesive layer may be disposed, as desired, e.g., between the first layer and the second layer, or between the third layer and the fourth layer, depending on the layer organization. e.g., in the case where an interlayer adhesion strength is insufficient. As the adhesive layer resins, it is possible to use EVA, EEA, EAA, acid-modified polyolefins (reaction products of olefin homopolymers or copolymers with unsaturated carboxylic acids such as maleic acid and fumaric acid, acid anhydrides, esters and metal salts of such unsaturated carboxylic acids, etc.), such as acid-modified polyolefins inclusive of, e.g., acid-modified VLDPE and acid-modified LLDPE. Suitable examples thereof may include: olefin resins modified with maleic acid, etc., or with anhydrides thereof; I0 resins, EVA; EEA, etc. These resins can also be used for principally constituting the second resin. In case where they are used to constitute the second layer, there may be provided an interlayer adhesion of at least 5 g/15 mm, preferably at least 7 g/15 mm, further preferably at least 10 g/15 mm, as measured by a T-form peeling test according to JIS K-6854. It is further preferred that the resin constituting the second layer has a melting point which is higher by at least 10 °C than a heat shrink temperature of the heat-shrinkable multilayer film from the viewpoint of maintaining the transparency after the heat shrinkage. Herein, the heat shrink temperature refers to a temperature at which the heat-shrinkable multilayer film is subjected to heat shrinkage.

Examples of representative layer structures of the multilayer film according to the present invention may include the following.

(1) first layer (surface layer)/intermediate layer/second layer (adhesive layer)/third layer (gas-barrier resin layer)/adhesive layer/intermediate layer/fourth layer (surface layer),

(2) first layer (surface layer)/second layer (adhesive layer)/third layer (intermediate layer)/third layer (gas-barrier resin layer)/third layer (intermediate layer)/adhesive layer/fourth layer (surface layer),

(3) first layer (surface layer)/intermediate layer/second layer (adhesive layer)/third layer (gas-barrier resin layer)/adhesive layer/fourth layer (surface layer),

(4) first layer (surface layer)/second layer (intermediate layer or adhesive layer)/third layer (gas-barrier resin layer)/intermediate layer or adhesive layer/fourth layer (surface layer),

(5) first layer (surface layer)/second layer (adhesive layer)/third layer (gas-barrier resin layer)/fourth layer (surface layer).

In the above layer structures, the first and fourth layers as the surface layers can be formed as sealing layers. The following resin organizations may be enumerated as examples thereof.

(6) first layer (VLDPE layer)/intermediate EMAA layer/second layer (adhesive layer)/third layer (PVDC layer)/adhesive layer/intermediate EVA layer/fourth layer (VLDPE layer),

(7) first layer (VLDPE layer)/intermediate EVA layer/second layer (adhesive layer)/third layer (PVDC layer)/adhesive layer/intermediate EVA layer/fourth layer (IO layer),

(8) first layer (IO layer)/second layer (EVA layer)/third layer (PVDC layer)/fourth layer (EVA layer), and

(9) first layer (VLDPE layer)/intermediate EVA layer/second layer (adhesive layer)/third layer (PVDC layer)/adhesive layer/fourth layer (EVA layer).

In the above layer structures, some layer(s) can contain a lubricant or an anti-static agent. Preferred examples of the lubricant may include: behenic acid amide, oleic acid amide, erucic acid amide and silica, added in a form of master batch. The addition amount thereof may preferably be 1 - 10 wt. % in the case of a master batch containing 20 wt. % of the lubricant. The anti-static agent may preferably comprise a surfactant, examples of which may include: an anionic surfactant, a cationic surfactant, a nonionic surfactant, an amphoteric surfactant, and a mixture of these. The anti-static agent may preferably be added in an amount of 0.05 - 2 wt. %, particularly 0.1 - 1 wt. % of the resin constituting the layer to which the anti-static agent is added.

The heat-shrinkable multilayer film according to the present invention may preferably have a heat shrinkability of at least 35 %, more preferably at least 40 %, most preferably at least 50 %, at a heat shrink temperature of 80 °C.

A heat-shrinkable multilayer film having such a heat shrinkability can intimately cling to contents of most kinds and beautifully package the contents, after the heat shrinkage. Such a multilayer film having a large heat shrinkability may be formed through co-extrusion.

According to the first embodiment of the present invention, the third layer is required to exhibit a specifically large heat shrinkability in order to suppress the deterioration of optical properties after the heat shrinkage. In the case where the third layer is a PVDC layer, it is difficult to effect a stretch orientation for providing the third layer with such a high heat shrinkability, but if the stretch orientation is performed after a yet-unstretched multi-layered parison is held or stored for at least 3 hours, preferably for 24 hours or more, at 10 - 35 °C, it becomes easy to develop a large heat shrinkability of the third layer. This tendency is more pronounced in the case where the PVDC is a binary copolymer. However, if the parison before stretching is held for an excessively long period, it becomes difficult to effect a stretch orientation of the parison. The upper limit corresponds to a heat shrinkability of around 20 %.

It is preferred that the resin constituting the second layer has a melting point which is higher by at least 10 °C, more preferably 15 °C or more, than the heat shrink temperature of the heat shrinkable multilayer film. In the case where the heat shrink temperature of the multilayer film is assumed to be around 80 °C, the second layer resin may preferably have a melting point of at least 90 °C, as measured by means of a differential Scanning calorimeter so as to effectively suppress the deterioration of optical properties after shrinkage. In case where the second layer resin exhibits plural peaks according to the measurement by a differential scanning calorimeter, a main peak is taken for determining the melting point of the second layer resin. The upper limit of the melting point of the second layer resin is restricted in connection with the interlayer adhesion with the third layer.

The heat-shrinkable multilayer film may preferably have a thickness in the range of 5 - 150 μm, more preferably 10 - 120 μm. At a thickness below 5 μm, a sufficient mechanical strength cannot be attained. In excess of 150 μm, whitening after the heat shrinkage is liable to occur. The thickness of the third layer may preferably be 1 - 50 μm. In the case where the third layer comprises a gas-barrier resin, the oxygen gas-barrier property is inferior at a thickness below 1 μm, and above 50 μm, the extrusion processing of the multilayer film becomes difficult. It is preferred that the first layer and the fourth layer forming the surface layers have a thickness in the range of 1 - 60 μm. In the case where the surface layer is a sealing layer, a thickness of at least 10 μm is preferred. The second layer used as an adhesive layer may preferably have a thickness of ca. 0.5 - 5 μm.

The heat-shrinkable multilayer film according to the present invention may be formed by first forming a parison by co-extrusion through a plurality of extruders and biaxially stretching the parison by a known process, such as the tenter process or the inflation process. The stretching ratio may preferably be ca. 2 - 4 times in both longitudinal and transverse directions. The multilayer film before or after the stretching may be exposed to radiation. By the exposure to actinic radiation, the product multilayer film may be provided with improved heat resistance and mechanical strength. Because of a moderate crosslinking effect thereof, the exposure to radiation can exhibit an effect of providing improved film formability by stretching and improved heat resistance. In the present invention, known radiation, such as α rays, β rays, electron beams, γ rays, or X rays may be used. In order to provide an adequate level of crosslinking effect, electron beams and γ rays are preferred, and electron beams are particularly preferred in view of facility of handling and high processing capacity in producing the objective multilayer film.

The conditions for the above exposure to radiation may be appropriately set depending on the purpose thereof, such as a required level of crosslinkage. For example, it is preferred to effect the electron beam exposure at an acceleration voltage in the range of 150 - 500 kilo-volts to provide an absorbed dose of 10 - 200 kGy (kilo-gray). In the case of γ-ray exposure, a dose rate of 0.05 - 3 kGy/hour is preferred.

The heat-shrinkable multilayer film may be used as a food packaging material and particularly optimally used for packaging foodstuffs, such as raw meat, ham, sausage or various meat products. The film may be used in a form of a bag, a tube, etc., which is suited for the objective packaging.

[Examples]

Hereinbelow, the present invention will be described more specifically based on Examples and Comparative Examples. It should be noted however that the scope of the present invention is not restricted by such Examples. Some methods for measurement of physical properties described herein and resin materials used are enumerated hereinbelow.

〈Physical property measurement methods〉

1. Heat shrinkability

A sample polymer film on which marks were indicated at a distance therebetween of 10 cm in each of a machine direction (MD) and a transverse direction (TD) perpendicular to the machine direction during the film formation, was dipped for 10 sec. in hot water adjusted at 80 °C and then taken out therefrom, followed by immediate quenching within water at room temperature. Thereafter, the distance between the marks was measured and a decrease in distance was indicated in percentage of the original distance 10 cm. Five sample films from each sample film were subjected to the above measurement, and the average value was indicated as a heat shrinkability.

2. Transparency (Haze)

A haze value (%) of a sample was measured according to JIS K-7105 by using a haze meter ("NDH-Σ80", made by Nippon Denshoku Kogyo K.K.). A smaller haze value represents a better transparency, and a larger haze value represents a worse transparency.

3. Resin melting point

Measured on temperature increase at a rate of 20 °C/min. by using a differential scanning calorimeter ("DSC-7", made by Perkin-Elmer Corp.). On a heat current-temperature curve obtained according to the measurement, a principal crystal melting peak temperature (abbreviated as "Tm") was read as a crystal melting temperature.

4. Oxygen permeability

An oxygen was permeability (unit = $cm^3/m^2.24h.atm$) of a heat-shrinkable multilayer film was measured according to JIS K-7126 by using an oxygen permeability meter ("OXTRAN-100", mfd. by Modern Controls Co.) under measurement conditions of temperature of 30 °C and relative humidity of 100 %. The measured value of oxygen gas permeability and the thickness (unit = μm) of the gas-barrier resin layer in the multilayer film at the portion subjected to the oxygen gas permeability measurement were substituted into the following conversion formula to obtain a oxygen permeability ($cm^3.cm/cm^2.sec.cmHg$).

Oxygen permeability = $1.523 \times 10^{-15}$ x (Oxygen gas permeability) x (Gas-barrier resin layer thickness)

5. Observation of PVDC layer at a section of film after shrinkage

A multilayer film after heat-shrinkage was slit into a width of 0.5 mm, and the slit section was observed through an optical microscope at a magnification of 40 to evaluate the flexure or bending of the PVDC layer.

6. Heat-shrinkability of a third layer

Peeling start points or notches were formed at a section of a sample heat-shrinkable multilayer film, and the third layer was gradually peeled from the other layers from the start points to isolate the third layer. The heat shrinkability of the thus-isolated third layer was measured according to the above-mentioned heat shrinkability measurement method.

(Resin materials used)

(1) VLDPE

"AFFINITY FW1650" (made by Dow Chemical Co,; density = 0.902 $g/cm^3$, MFR = 3.0 g/10 min., Tm (melting point) = 100 °C). Hereinafter identified as "SSC-VLDPE".

(2) EMAA-IBA (ethylene-methacrylic acid-unsaturated carboxylic acid ester copolymer)

Ethylene-methacrylic acid-isobutyl acrylate copolymer ("NUCREL AN4217-1C", made by Mitsui Dupont Polychemical K.K.; density = 0.94 $g/cm^3$, MFR = 2.4 g/10 min. Tm = 87 °C). Hereinafter, identified as "EMAA-IBA".

(3) PVDC

Terpolymer comprising 82 wt. % of vinylidene chloride, 15 wt. % of vinyl chloride and 3 wt. % of lauryl acrylate (made by Kureha Kagaku Kogyo K.K.). Identified as "A".
Binary copolymer comprising 82 wt. % of vinylidene chloride and 18 wt. % of vinyl chloride (made by Kureha Kagaku Kogyo K.K.). Identified as "B".

(4) EVA

EVA resin ("EVAFLEX V-5714", made by Mitsui Dupont Polychemical K.K.; density = 0.94 g/cm$^3$, MFR = 2.5 g/10 min., Tm = 91 °C, vinyl acetate content = 15 wt. %). Identified as "EVA-1".

EVA resin ("EVAFLEX V-5715", made by Mitsui Dupont Polychemical K.K.; density = 0.94 g/cm$^3$, MFR = 2.0 g/10 min., Tm = 88 °C, vinyl acetate content = 19 wt. %). Identified as "EVA-2".

(5) Adhesive layer

EEA resin ("DPDJ-6182", made by Nippon Unicar K.K.; density = 0.94 g/cm$^3$, MFR = 1.5 g/10 min., Tm = 97 °C, ethyl acrylate content = 15 wt. %). Identified as "EEA-1".

Ethylene-ethyl acrylate copolymer ("OM-902", made by Nippon Unicar K.K.; density = 0.94 g/cm$^3$, MFR = 4.0 g/10 min., Tm = 97 °C, ethyl acrylate content = 15 wt. %). Identified as "EEA-2".

EVA resin ("EVATATE PC-149", made by Sumitomo Kagaku K.K.; density = 0.94 g/cm$^3$, MFR = 4.2 g/10 min., Tm = 92 °C, Vinyl acetate content = 15 wt. %). Identified as "EVA-3".

(6) Ionomer

"HI-MILAN AM7930" (made by Mitsui Dupont Polychemical K.K.; density = 0.94 g/cm$^3$, MFR = 3.1 g/10 min., Tm = 90 °C, ionization degree = 8 %).

(Additives)

(1) Epoxidized linseed oil

Epoxidized linseed oil ("ADECASIZER O-180A", made by Asahi Denka K.K.). Identified as "O-180A".

(2) Dibutyl sebacate

Dibutyl sebacate ("DBS", made by Daihachi Kagaku K.K.). Identified as "DBS".

(4) Glycerin Monostearate

"RIKEMAL S-100" (made by Riken Vitamin K.K.). Identified as "GMS".

(Preparation of PVDC compounds)

Respective PVDC compounds having compositions shown in Table 1 below were prepared by adding prescribed amounts of the above additives.

Table 1

| Name | Resin | Relative amounts (wt.parts) | | | |
|------|-------|------|--------|-----|-----|
| | | PVDC | O-180A | DBS | GMS |
| PVDC-1 | A | 100 | 1.8 | 0.9 | 1.0 |
| PVDC-2 | A | 100 | 2.3 | 0 | 1.0 |
| PVDC-3 | B | 100 | 2.3 | 0.9 | 1.0 |
| PVDC-4 | B | 100 | 2.3 | 0 | 1.0 |

(Example 1)

The vinylidene chloride-vinyl chloride-lauryl acrylate terpolymer (PVDC-1), ionomer (IO), ethylene-ethyl acrylate copolymer (EEA-1), ethylene-vinyl acrylate copolymers (EVA-1), (EVA-2) and linear very low-density polyethylene (SSC-VLDPE) were separately extruded through 6 co-extruders, and the melted respective polymers were introduced into a co-extrusion annular die and melt-laminated to be co-extruded in 7 layers from the outer to the inner layers of (SSC-VLDPE)/(EVA-2)/(EEA-1)/(PVDC-1)/(EEA-1)/(EVA-1)/(IO). The parison resin temperature at the die outlet was 200 °C. The parison was cooled by showering with cold water of 8 - 20 °C to form a flat tubular body having a lay-flat width of 138 mm and a thickness of 558 μm. The flat tubular body was irradiated with electron rays at a dose of 80 kGy within an electron ray irradiation apparatus at an acceleration voltage of 300 keV, immediately thereafter was passed through a hot water bath at 82 °C and then subjected to simultaneously biaxial stretching at 3.1 times in the machine direction and 3.0 times in the transverse direction by inflation while being cooled with air at 10 °C from an air ring. The resultant biaxially stretched film had a lay-flat width of 416 mm and a thickness of 60 μm. The multilayer film was stored for four weeks in a thermostat chamber at 23 °C.

(Example 2)

A biaxially stretched film was produced in the same manner as in Example 1 except for changing the temperature of the thermostat chamber to 30 °C.

(Example 3)

A biaxially stretched film was produced in the same manner as in Example 1 except for changing the temperature of the thermostat chamber to 35 °C.

(Example 4)

A biaxially stretched film was produced in the same manner as in Example 1 except for changing (PVDC-1) to (PVDC-2).

(Example 5)

A biaxially stretched film was produced in the same manner as in Example 4 except for changing the temperature of the thermostat chamber to 30 °C.

(Example 6)

A biaxially stretched film was produced in the same manner as in Example 4 except for changing the temperature of the thermostat chamber to 35 °C.

(Example 7)

The resins of (PVDC-3), (IO), (EVA-1), (EVA-2), (EVA-3) and (SSC-VLDPE) were separately extruded through 6 extruders, and the melted respective polymers were introduced into a co-extrusion annular die and melt-laminated to be co-extruded in 7 layers from the outer to the inner layers of (SSC-VLDPE)/(EVA-2)/(EVA-3)/(PVDC-3)/(EVA-3)/(EVA-1)/(IO). The parison resin temperature at the die outlet was 200 °C. The parison was cooled by showering with cold water of 8 - 20 °C to form a flat tubular body having a lay-flat width of 138 mm and a thickness of 558 μm. The flat tubular body was irradiated with electron rays at a dose of 80 kGy within an electron ray irradiation apparatus at an acceleration voltage of 300 keV, to form a parison. The parison was stored at 30 °C for 1 day, then passed through a hot water bath at 82 °C and then subjected to simultaneously biaxial stretching at 3.1 times in the machine direction and 3.0 times in the transverse direction by inflation while being coaled with air at 10 °C from an air ring. The resultant biaxially stretched film had a lay-flat width of 416 mm and a thickness of 60 μm. The multilayer film was stored for four weeks in a thermostat chamber at 23 °C.

(Example 8)

A biaxially stretched film was produced in the same manner as in Example 7 except for changing the temperature of the thermostat chamber to 30 °C.

(Example 9)

A biaxially stretched film was produced in the same manner as in Example 1 except for changing (EVA-2) to (EMAA-IBA), (IO) to (SSC-VLDPE), and the temperature of the thermostat chamber to 30 °C.

(Comparative Example 1)

A biaxially stretched film was produced in the same manner as in Example 1 except for changing (PVDC-1) to (PVDC-4), and the temperature of the thermostat chamber to 30 °C.

(Comparative Example 2)

A biaxially stretched film was produced in the same manner as in Example 7 except that the obtained parison was immediately passed through a hot water bath at 82 °C and then subjected to the inflation, and the temperature of the thermostat chamber was changed to 30 °C.

(Comparative Example 3)

A biaxially stretched film was produced in the same manner as in Example 9 except for changing (EEA-1) to (EEA-2), and (PVDC-1) to (PVDC-3).

The layer structures of the multilayer films produced in Examples and Comparative Examples are shown in Table 2 below.

All the heat-shrinkable multilayer films were respectively stored in a wound roll form in a length of 500 m for 4 weeks in the thermostat chambers at the prescribed temperatures. Performance evaluation of each film was performed by using a medium portion of the wound roll film. The evaluation results are shown in Table 3 below.

Table 2

| Example | Laminated film layer structure | | | | | | |
|---------|---------|---------|-----------|-----------|-----------|-----------|-----------|
| | 1st layer | | 2nd layer | 3rd layer | A.L.* | I.L.* | 4th layer |
| | (3 μm) | (22 μm) | (1.5 μm) | (7 μm) | (1.5 μm) | (15 μm) | (10 μm) |
| 1~3 | SSC-VLDPE | EVA-2 | EEA-1 | PVDC-1 | EEA-1 | EVA-1 | IO |
| 4~6 | SSC-VLDPE | EVA-2 | EEA-1 | PVDC-2 | EEA-1 | EVA-1 | IO |
| 7,8 | SSC-VLDPE | EVA-2 | EVA-3 | PVDC-3 | EVA-3 | EVA-1 | IO |
| 9 | SSC-VLDPE | EMAA | EEA-1 | PVDC-1 | EEA-1 | EVA-1 | SSC-VLDPE |
| Comp.1 | SSC-VLDPE | EVA-2 | EEA-1 | PVDC-4 | EEA-1 | EVA-1 | IO |
| Comp.2 | SSC-VLDPE | EVA-2 | EVA-3 | PVDC-3 | EVA-3 | EVA-1 | IO |
| Comp.3 | SSC-VLDPE | EMAA-IBA | EEA-2 | PVDC-3 | EEA-2 | EVA-1 | SSC-VLDPE |

\* A.L.=adhesive layer
I.L.=intermediate layer

## Table 3

| Example | Shrinkability *2 (80 °C) | Amount of plasticizer in PVDC layer (PHR) | Tm (° C) of 2nd layer resin | Oxygen permeability*1 x10⁻¹³ | PVDC layer | | Haze (%) *3 |
|---|---|---|---|---|---|---|---|
| | | | | | shrinkability (80 ° C) | flexure/ bending | |
| 1 | 54 | 0.9 | 97 | 10.9 | 7 | no | 4 |
| 2 | 52 | 0.9 | 97 | 8.0 | 0 | no | 4 |
| 3 | 50 | 0.9 | 97 | 6.3 | -2 | no | 7 |
| 4 | 55 | 0 | 97 | 8.4 | 5 | no | 3 |
| 5 | 53 | 0 | 97 | 8.3 | 1 | no | 3 |
| 6 | 50 | 0 | 97 | 7.9 | -3 | no | 3 |
| 7 | 55 | 0.9 | 92 | 4.3 | 14 | no | 4 |
| 8 | 54 | 0.9 | 92 | 4.3 | 11 | no | 4 |
| 9 | 44 | 0.9 | 92 | 5.2 | 7 | no | 6 |
| Comp.1 | 52 | 0 | 97 | 2.3 | 0 | yes | 32 |
| Comp.2 | 53 | 0.9 | 92 | 5.3 | 5 | yes | 21 |
| Comp.3 | 41 | 0.9 | 92 | 3.1 | -3 | yes | 65 |

*1: unit: $(cm^3 \cdot cm/cm^2 \cdot sec \cdot cmHg)$

*2: Shrinkability of product multilayer film.

*3: Haze (%) (Transparency afer heat-shrinkage).

Incidentally, the above Examples 1, 7 and 8 were examples according to the first embodiment of the present invention wherein the heat shrinkability of a third layer comprising a PVDC binary copolymer or terpolymer, and Examples 1 - 6 and 9 were examples according to the second embodiment of the present invention using a PVDC terpolymer. In any Examples, the deterioration of optical properties due to flexure or bending of the third layer (PVDC layer) could be prevented.

[INDUSTRIAL APPLICABILITY]

As described above, according to the present invention, there is provided a heat-shrinkable multilayer film including a third layer having a small heat-shrinkability and yet capable of preventing the deterioration of optical properties, such as whitening and lowering of transparency after heat-shrinkage, so that the heat-shrinkable multilayer film is suitably used for providing a beautiful packaging of contents, such as raw meat and processed meat.

**Claims**

1. A heat-shrinkable multilayer film comprising at least three layers including a first layer, a second layer and a third layer laminated in this order, wherein the third layer has a heat shrinkability at 80 °C which is smaller than a heat shrinkability at 80 °C of the entire heat-shrinkable multilayer film, exceeds 5 % and is at most 20 %.

2. A heat-shrinkable multilayer film according to Claim 1, exhibiting an entire heat-shrinkability of at least 35 % at 80 °C.

3. A heat-shrinkable multilayer film according to Claim 1, wherein the third layer comprises a gas-barrier resin.

4. A heat-shrinkable multilayer film according to Claim 3, wherein the gas-barrier resin is a vinylidene chloride copolymer.

5. A heat-shrinkable multilayer film according to Claim 4, wherein the vinylidene chloride copolymer is a binary copolymer.

6. A heat-shrinkable multilayer film comprising at least three layers including a first layer, a second layer and a third layer laminated in this order, wherein the third layer has a heat shrinkability smaller than a heat shrinkability of the entire heat-shrinkable multilayer film and comprises a vinylidene chloride terpolymer.

7. A heat-shrinkable multilayer film according to any one of Claims 1 - 6, having an oxygen permeability of at least $4.0 \times 10^{-13}$ $cm^3$.cm/$cm^2$.sec. cmHg.

8. A heat-shrinkable multilayer film according any one of Claims 1 - 6, wherein the second layer adjacent to the third layer comprises a resin having a melting point which is higher by at least 10 °C than a heat shrink temperature of the heat-shrinkable multilayer film.

9. A heat-shrinkable multilayer film according any one of Claims 1 - 6, wherein the first layer comprises a resin which is a metallocene-catalyzed polyolefin.

## INTERNATIONAL SEARCH REPORT

| International application No. |
| --- |
| PCT/JP99/00301 |

**A. CLASSIFICATION OF SUBJECT MATTER**

$Int.Cl^6$ B32B7/02

According to International Patent Classification (IPC) or to both national classification and IPC

**B. FIELDS SEARCHED**

Minimum documentation searched (classification system followed by classification symbols)

$Int.Cl^6$ B32B1/00-35/00

Documentation searched other than minimum documentation to the extent that such documents are included in the fields searched

| | | | |
| --- | --- | --- | --- |
| Jitsuyo Shinan Koho | 1926-1996 | Toroku Jitsuyo Shinan Koho | 1994-1999 |
| Kokai Jitsuyo Shinan Koho | 1971-1999 | Jitsuyo Shinan Toroku Koho | 1996-1999 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP, 9-99526, A (Kureha Chemical Industry Co., Ltd.), | 1-9 |
| Y | 15 April, 1997 (15. 04. 97), Claims ; Examples 1 to 8 & AU, 9660825, A & EP, 756931, A & AU, 698972, B | |
| X | JP, 9-286086, A (Asahi Chemical Industry Co., Ltd.), | 1-8 |
| Y | 4 November, 1997 (04. 11. 97), Claims ; Examples 1 to 4 (Family: none) | 9 |
| X | JP, 8-239493, A (Kureha Chemical Industry Co., Ltd.), | 1-8 |
| Y | 17 September, 1996 (17. 09. 96), Claims ; Par. Nos. [0030], [0031], [0077] ; Examples 5 to 14 & EP, 472418, A & AU, 9182611, A & CA, 2049611, A & ZA, 9106558, A & ZN, 239429, A & US, 5270390, A | 9 |

☒ Further documents are listed in the continuation of Box C. ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 25 March, 1999 (25. 03. 99) | 6 April, 1999 (06. 04. 99) |

| Name and mailing address of the ISA/ | Authorized officer |
| --- | --- |
| Japanese Patent Office | |
| Facsimile No. | Telephone No. |

Form PCT/ISA/210 (second sheet) (July 1992)

INTERNATIONAL SEARCH REPORT

International application No.

PCT/JP99/00301

C (Continuation). DOCUMENTS CONSIDERED TO BE RELEVANT

| Category* | Citation of document, with indication, where appropriate, of the relevant passages | Relevant to claim No. |
|---|---|---|
| X | JP, 5-222259, A (Kureha Chemical Industry Co., Ltd.), | 1-8 |
| Y | 31 August, 1993 (31. 08. 93), Claims ; Par. Nos. [0030], [0031], [0077] ; Examples 1 to 14 & EP, 472418, A & AU, 9182611, A & CA, 2049611, A & ZA, 9106558, A & ZN, 239429, A & US, 5270390, A | 9 |
| X | JP, 3-30947, A (Kureha Chemical Industry Co., Ltd.), | 1-8 |
| Y | 8 February, 1991 (08. 02. 91), Claims ; page 5, upper right column, line 4 to lower left column, line 4 ; Examples 1 to 9 ; Comparative Examples 2, 4 & EP, 405933, A & AU, 9057876, A & US, 5232767, A & DE, 69009309, E & ES, 2054252, T | 9 |
| X | JP, 3-24953, A (Kureha Chemical Industry Co., Ltd.), | 1-8 |
| Y | 1 February, 1991 (01. 02. 91), Claims ; page 4, upper right column, lines 9 to 15 ; page 7, lower left column, line 16 to lower right column, line 10 ; Examples 1 to 7 (Family: none) | 9 |

Form PCT/ISA/210 (continuation of second sheet) (July 1992)